(19) Europäisches Patentamt
European Patent Office
Office européen des brevets

(11) **EP 4 220 363 A1**

(12) **EUROPEAN PATENT APPLICATION**
published in accordance with Art. 153(4) EPC

(43) Date of publication:
**02.08.2023 Bulletin 2023/31**

(21) Application number: **21871120.8**

(22) Date of filing: **10.08.2021**

(51) International Patent Classification (IPC):
**G06F 3/048** (2013.01)

(52) Cooperative Patent Classification (CPC):
**G06F 3/048; G06F 3/04817; G06F 16/16;
H04M 1/72472**

(86) International application number:
**PCT/CN2021/111876**

(87) International publication number:
**WO 2022/062743 (31.03.2022 Gazette 2022/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.09.2020 CN 202011035448**

(71) Applicant: **Petal Cloud Technology Co., Ltd.
Dongguan, Guangdong 523799 (CN)**

(72) Inventor: **LV, Juntao
Shenzhen, Guangdong 518129 (CN)**

(74) Representative: **Thun, Clemens
Mitscherlich PartmbB
Patent- und Rechtsanwälte
Sonnenstraße 33
80331 München (DE)**

(54) **APPLICATION ICON DISPLAY METHOD AND RELATED DEVICE**

(57) An application icon display method is provided, which is applied to an electronic device. The method includes: enabling a hotspot folder function if a hotspot folder function enabling operation is received; setting a hotspot folder policy; creating a hotspot folder on a desktop of the electronic device; obtaining application running data of the electronic device; and determining a hotspot application according to the hotspot folder policy and the application running data, keeping a location of an original application icon on the desktop of the electronic device unchanged, and placing an application icon corresponding to the hotspot application in the hotspot folder. By means of the method, the search efficiency of applications can be improved.

FIG. 2

## Description

This application claims priority to Chinese Patent Application No. 202011035448.9, filed with the China National Intellectual Property Administration on September 27, 2020 and entitled "APPLICATION ICON DISPLAY METHOD AND RELATED DEVICE", which is incorporated herein by reference in its entirety.

## TECHNICAL FIELD

This application relates to the technical field of electronic devices, and in particular, to an application icon display method and a related device.

## BACKGROUND

With popularization of terminal devices such as mobile phones and tablet computers, users have increasing requirements for applications. Software developers develop various applications according to requirements of the users, and the users download applications to the terminal devices through application download platforms and install the applications on the terminal devices. Generally, after downloading and installing applications, the users place application icons on desktops of the terminal devices in a form of shortcuts for ease of use. However, with continuous enrichment of applications, there are more and more applications on the terminal devices. As a result, a plurality of application icons are placed on the desktops of the terminal devices, the application icons are scattered on different pages of the desktops, and it is difficult for the users to find a required application icon to start an application.

The users may create folders to place the application icons, for example, place the application icons in different folders based on application types. However, the users often use different types of applications for a period of time. If the application icons are placed in the different folders based on the application types, the users need to find a corresponding folder, and then find the required application icon from the folder to start the application. In this way, search efficiency is relatively low.

## SUMMARY

Embodiments of this application disclose an application icon display method and a related device, which can improve search efficiency of applications.

According to a first aspect of this application, an application icon display method is disclosed. The application icon display method is applied to an electronic device. The method includes:

enabling a hotspot folder function if a hotspot folder function enabling operation is received;
setting a hotspot folder policy;
creating a hotspot folder on a desktop of the electronic device;
obtaining application running data of the electronic device; and
determining a hotspot application according to the hotspot folder policy and the application running data, keeping a location of an original application icon on the desktop of the electronic device unchanged, and placing an application icon corresponding to the hotspot application in the hotspot folder.

According to the application icon display method in this application, a hotspot application is determined according to usage of applications, and an application icon corresponding to the hotspot application is placed in a hotspot folder. Therefore, a user can find a required application only in the hotspot folder, thereby improving search efficiency of applications.

In some optional implementations, the hotspot folder function enabling operation is received through a hotspot application setting interface, a hotspot application setting menu includes a hotspot folder function switch, and the hotspot folder function enabling operation is received if the hotspot folder function switch is in an on state.

In some optional implementations, the determining a hotspot application according to the hotspot folder policy and the application running data is performed if the hotspot folder policy changes, or if the hotspot folder policy is a recent policy and it is detected that an application exits, or if the hotspot folder policy is a smart policy and a time period corresponding to time of the electronic device changes.

In some optional implementations, the method further includes:
opening the hotspot folder if a hotspot folder opening operation is received.

In some optional implementations, the method further includes:
dragging the hotspot folder to a target location on the desktop of the electronic device if a drag operation on the hotspot folder is received.

In some optional implementations, the method further includes:
disabling the hotspot folder function if a close operation on the hotspot folder is received.

In some optional implementations, the method further includes:

displaying a shortcut of adding to the hotspot folder if it is detected that an application icon on the desktop of the electronic device is touched and held, and the touched and held application icon is not in the hotspot folder; and copying the touched and held application icon to the hotspot folder if it is detected that a user selects the shortcut "Add to a hotspot folder".

In some optional implementations, the method further includes:

displaying a shortcut "Remove from a hotspot folder" if the touched and held application icon is in the hotspot folder; and
removing the touched and held application icon from the hotspot folder if it is detected that the user selects the shortcut "Remove from a hotspot folder".

In some optional implementations, the method further includes:
displaying a shortcut operation interface of the hotspot folder if it is detected that the hotspot folder is touched and held.

In some optional implementations, the shortcut operation interface includes a shortcut menu "Delete a hotspot folder", a shortcut menu "Copy a hotspot folder to a lock screen", and a shortcut menu "Switch a hotspot folder policy".

According to a second aspect of this application, a computer-readable storage medium is disclosed. The computer-readable storage medium includes computer instructions. When the computer instructions run on an electronic device, the electronic device is enabled to perform the application icon display method as described in the first aspect.

According to a third aspect of this application, an electronic device is disclosed. The electronic device includes a processor and a memory. The memory is configured to store instructions. The processor is configured to invoke the instructions in the memory. The electronic device is enabled to perform the application icon display method as described in the first aspect.

According to a fourth aspect of this application, a computer program product is disclosed. When the computer program product runs on a computer, the computer is enabled to perform the application icon display method as described in the first aspect.

According to a fifth aspect of this application, a chip system is disclosed. The chip system is applied to an electronic device. The chip system includes an interface circuit and a processor. The interface circuit and the processor are interconnected through a line. The interface circuit is configured to receive a signal from a memory of the electronic device, and send a signal to the processor. The signal includes computer instructions stored in the memory. When the processor executes the computer instructions, the chip system performs the application icon display method as described in the first aspect.

According to a sixth aspect of this application, an apparatus is disclosed. The apparatus has a function of implementing behaviors of the electronic device in the method provided in the first aspect. The function may be implemented by using hardware, or may be implemented by using hardware executing corresponding software. The hardware or software includes one or more modules corresponding to the foregoing function.

It should be understood that the computer-readable storage medium provided in the second aspect, the electronic device in the third aspect, the computer program product in the fourth aspect, the chip system in the fifth aspect, and the apparatus in the sixth aspect all correspond to the method in the first aspect. Therefore, for beneficial effects that can be achieved, reference may be made to the beneficial effects of the corresponding method provided above. Details are not described herein again.

**BRIEF DESCRIPTION OF DRAWINGS**

FIG. 1 is a schematic diagram of an application scenario of an application icon display method according to an embodiment of this application;
FIG. 2 is a flowchart of an application icon display method according to an embodiment of this application;
FIG. 3A to FIG. 3C are a schematic diagram of entering a hotspot application setting interface through a user operation;
FIG. 4 is a schematic diagram of a hotspot application setting interface;
FIG. 5A and FIG. 5B are a schematic diagram after a hotspot folder is opened; and
FIG. 6 is a schematic structural diagram of an electronic device according to an embodiment of this application.

**DESCRIPTION OF EMBODIMENTS**

To better understand an application icon display method and a related device according to embodiments of this application, the following first describes an application scenario of the application icon display method in this application.

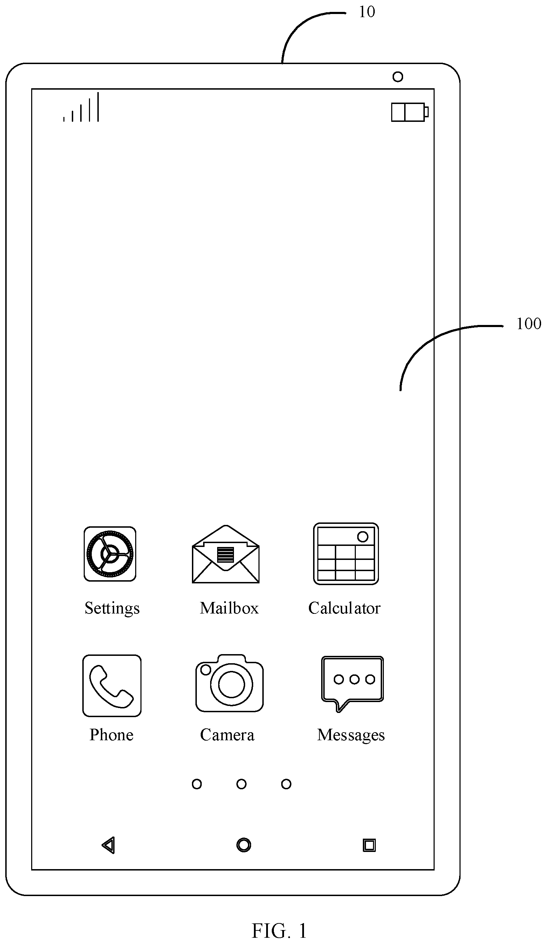

FIG. 1 is a schematic diagram of an application scenario of an application icon display method according to an embodiment of this application. As shown in FIG. 1, the application icon display method is applied to an electronic device 10. The electronic device 10 includes a plurality of applications, for example, a phone, a camera, information, and the like. The electronic device 10 displays a desktop 100. The desktop 100 includes a plurality of application icons. As shown in FIG. 1, the desktop includes call application icon, Camera application icon, Messages application icon, and the like. A plurality of application icons are distributed on each page of the desktop 100. The application icons are shortcuts of applications, and corresponding applications may be started through the application icons. According to the application icon display method, a hotspot folder is generated on the desktop 100, application icons in the hotspot folder are dynamically adjusted according to usage of applications, and a user can quickly start required applications through the application icons in the hotspot folder. Change of the application icons in the hotspot folder does not affect original application icons on the desktop of the electronic device.

The electronic device 10 may include a smartphone, a tablet computer, a desktop computer, a laptop portable computer, an in-vehicle computer, and the like.

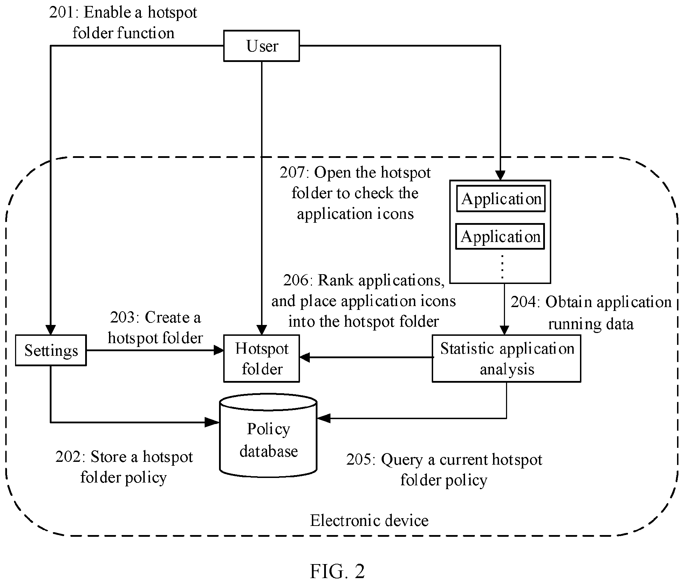

FIG. 2 is a flowchart of an application icon display method according to an embodiment of this application. The following describes the application icon display method in this application through FIG. 2.

201: Display a hotspot application setting interface on an electronic device, receive a hotspot folder function enabling operation of a user from the hotspot application setting interface, and enable a hotspot folder function according to the hotspot folder function enabling operation.

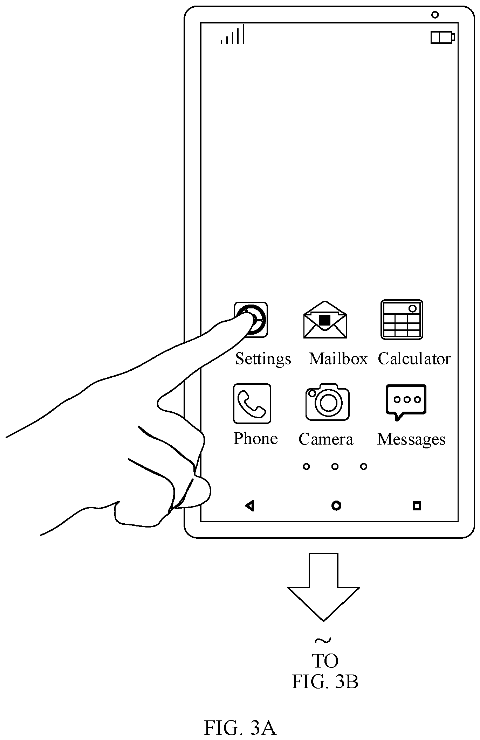

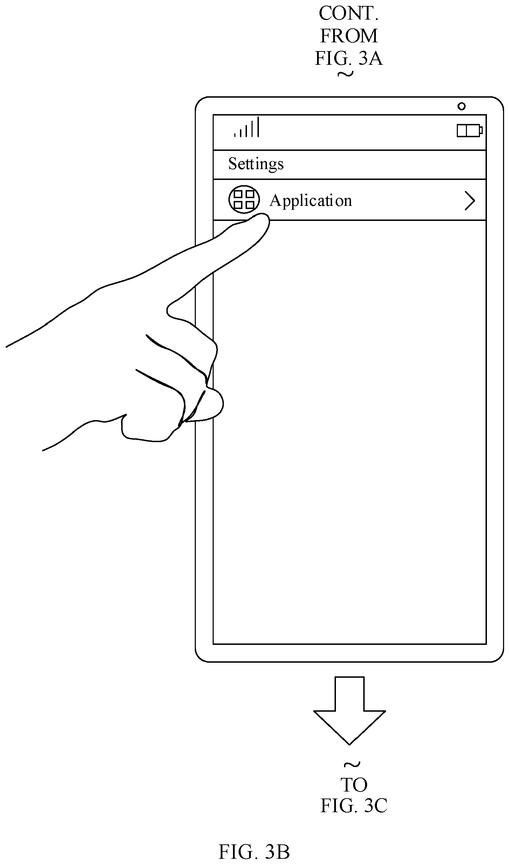

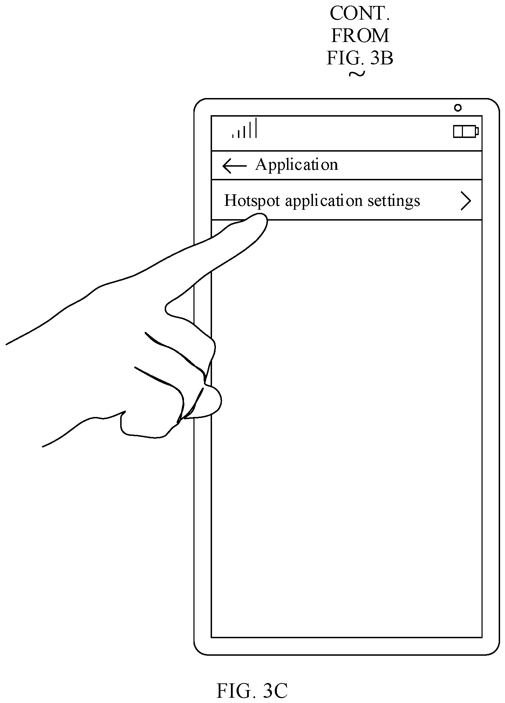

A hotspot application setting menu may be configured on a user interface of the electronic device, and the user opens a hotspot application setting interface through the hotspot application setting menu. For example, referring to FIG. 3A to FIG. 3C, the user taps "Settings" -> "Application" -> "Hotspot application settings" to enter the hotspot application setting interface.

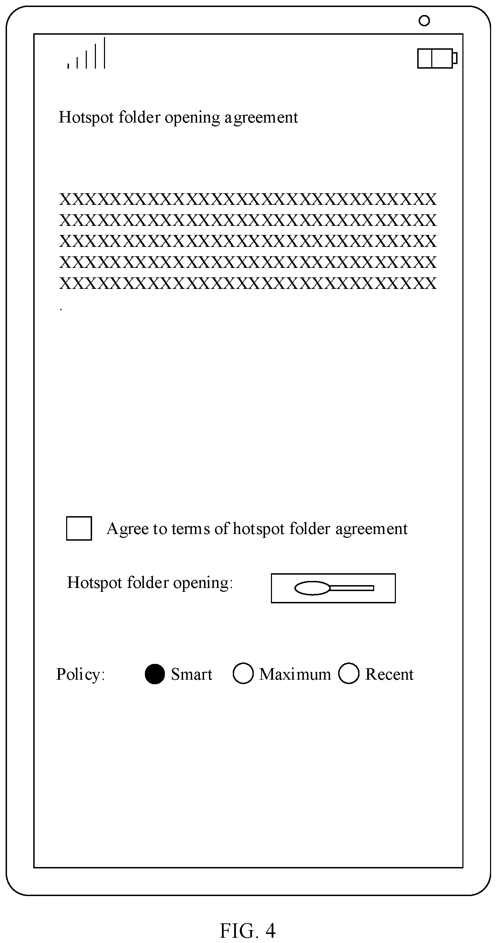

FIG. 4 is a schematic diagram of a hotspot application setting interface. The hotspot application setting interface may include a hotspot folder opening agreement and a hotspot folder function switch. After it is detected that the user agrees to the hotspot folder opening agreement and sets the hotspot folder function switch to an on state, the hotspot folder function is enabled.

It should be understood that, in another example, the hotspot application setting interface may not include a hotspot folder opening agreement. The hotspot folder function may be enabled when it is detected that the user sets the hotspot folder function switch to an on state.

It should be understood that, in another embodiment, the hotspot folder function may be enabled through another user operation. For example, it may be determined whether a first preset button operation (for example, pressing a power button of the electronic device twice consecutively or simultaneously pressing a power button and a menu button of the electronic device) performed by the user on the electronic device is received. If the first preset button operation is received, the hotspot folder function is enabled. For another example, it may be determined whether a first preset speech instruction (for example, "Enable hotspot folder function") of the user is received. If the first preset speech instruction is received, the hotspot folder function is enabled. For another example, if a touch and hold operation performed by the user on a blank area of a page on the desktop is received, a menu including an option "Open a hotspot folder" is displayed. If user selection of the option "Open a hotspot folder" on the menu is received, the hotspot folder function is enabled.

202: Receive, from the hotspot application setting interface, a hotspot folder policy set by the user, and store the hotspot folder policy in a policy database.

The hotspot application setting interface may include a plurality of policy options, and the user selects a required hotspot folder policy from the policy options.

Referring to FIG. 4, the hotspot application setting interface includes three policy options: smart policy, maximum policy, and recent policy.

The smart policy is to collect statistics on usage of applications by the user in different time periods and to display application icons in the hotspot folder according to the usage of the applications by the user in the different time periods. For example, an application ranking is obtained by collecting statistics on the usage of the applications by the user in each time period, and top-ranked application icons are displayed in the hotspot folder according to the application ranking in each time period. For example, a day is divided into six time periods: early morning, morning, forenoon, noon, afternoon, and evening. If a current time belongs to morning, application icons are displayed in the hotspot folder according to an application ranking in the morning time period. If a current time belongs to noon, application icons are displayed in the hotspot folder according to an application ranking in the noon time period.

The maximum policy is to collect statistics on use frequencies of applications in a past period of time (for example, a past seven days), and to display application icons in the hotspot folder according to the use frequencies of the applications in the past period of time. For example, an application ranking is obtained according to the use frequencies of the applications in the past period of time, and application icons are displayed in the hotspot folder according to the application ranking in the past period of time.

The recent policy is to collect statistics on applications recently used by the user, and to display application icons in the hotspot folder according to the applications recently used by the user. For example, an application ranking of recently used applications is obtained according to the applications recently used by the user, and icons of the recently used applications are displayed in the hotspot folder according to the application ranking.

It should be understood that, in addition to the smart policy, the maximum policy, and the recent policy, another hotspot folder policy may be set. For example, a maximum time policy may be set to collect statistics on use duration of applications in a past period of time (for example, a past seven days), and to display application icons in the hotspot folder according to the use duration of the applications in the past period of time.

203: Create a hotspot folder on a desktop of the electronic device.

For example, a hotspot folder is created on a desktop of the electronic device by invoking an mkdirs() function.

After the hotspot folder is created on the desktop of the electronic device, the hotspot folder is displayed on the desktop of the electronic device.

The hotspot folder may be displayed at any location on the desktop of the electronic device. For example, the hotspot folder is displayed on a home page of the desktop of the electronic device. For another example, the hotspot folder is displayed on a resident icon bar at the bottom of the desktop. Icons in the resident icon bar are resident icons and will not be changed with screen sliding.

204: Obtain application running data of the electronic device.

Application running data is data about usage of an application, and reflects a use frequency, use duration, and the like of the application.

The application running data may include an application package name, an application name, an application start time, and an application end time.

The application running data may be obtained from a log file of the electronic device.

205: Query the hotspot folder policy from the policy database.

For example, if the user sets the hotspot folder policy as the recent policy most recently, it is found from the policy database that the hotspot folder policy is the recent policy.

206: Determine a hotspot application according to the queried hotspot folder policy and the application running data, keep a location of an original application icon on the desktop of the electronic device unchanged, and place an application icon corresponding to the hotspot application in the hotspot folder.

The applications may be ranked according to the queried hotspot folder policy and the application running data, and hotspot applications are obtained according to the ranking.

For example, if the hotspot folder policy is the recent policy, statistics are collected on applications recently used by the user, the applications are ranked according to use time, and hotspot applications are obtained according to the ranking. An application icon corresponding to an application with a shorter use time may be top-ranked in the hotspot folder.

It should be understood that applications may not be ranked, but hotspot applications are determined in another manner. For example, application running data corresponding to each application is compared with a reference value, and a hotspot application is determined according to a comparison result. For example, the hotspot folder policy is the maximum policy. Statistics are collected on a use frequency of an application in a past period of time (for example, a past seven days), and an application icon corresponding to an application having a use frequency in the past period of time greater than or equal to a preset frequency (for example, five times a day) is displayed in the hotspot folder.

A preset quantity of application icons may be added to the hotspot folder. For example, top 10 application icons are added to the hotspot folder.

When the application icon is added to the hotspot folder, a location of an original application icon on the desktop of the electronic device is kept unchanged. That is, the hotspot folder does not affect an original application icon (including an application icon in an original folder created by the user) on the desktop. Therefore, the application icon in the hotspot folder may be dynamically adjusted according to the usage of the application and the change of the hotspot folder policy, while the original application icon on the desktop does not change according to the usage of the application and the change of the hotspot folder policy, thereby taking into account various requirements of the user. On one hand, the user can quickly find an icon of a recently used application from the hotspot folder. On the other hand, the user can find a required application icon from an original location (for example, in a folder created by the user), thereby improving user experience.

It may be determined whether the hotspot folder policy stored in the policy database changes. If the hotspot folder policy in the policy database changes (the user resets the hotspot folder policy), the applications are ranked according to the hotspot folder policy and the application running data, and icons of recently used applications are placed in the hotspot folder according to the ranking.

Alternatively, when the hotspot folder policy is set as the recent policy, it may be detected whether an application exits. If the application exits, the applications are ranked according to the hotspot folder policy and the application running data, and icons of recently used applications are placed in the hotspot folder according to the ranking.

Alternatively, when the hotspot folder policy is set as the smart policy, it may be determined whether a current time period changes. If the current time period changes, the applications are ranked according to the hotspot folder policy and the application running data, and icons of recently used applications are placed in the hotspot folder according to the ranking.

Application icons in the hotspot folder may be dynamically adjusted according to the foregoing manner.

207: Open the hotspot folder after receiving a hotspot folder opening command.

For example, if it is detected that the user taps the hotspot folder, the hotspot folder is opened, and a hotspot folder page is entered.

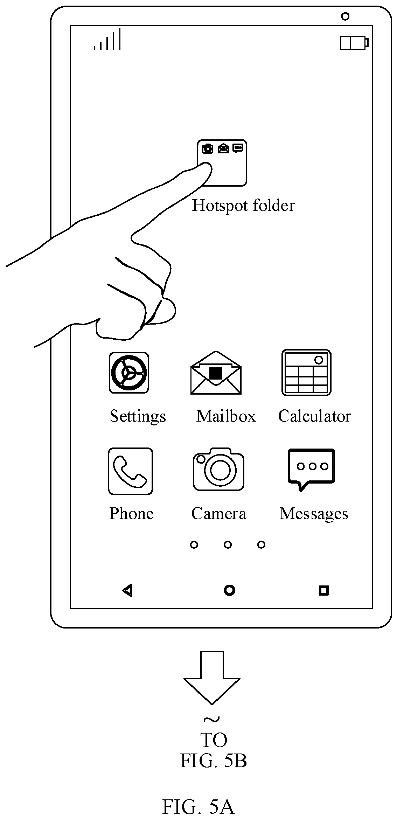

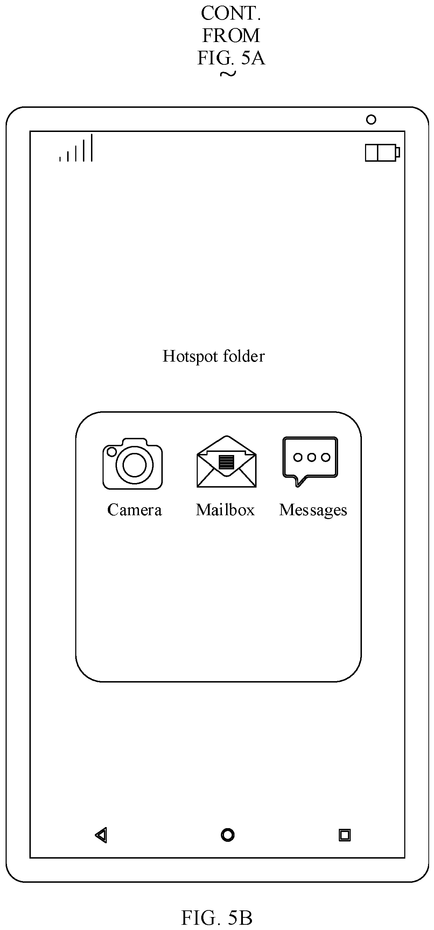

FIG. 5A and FIG. 5B are a schematic diagram after a hotspot folder is opened. After the user taps the hotspot folder on the desktop, the hotspot folder page is entered, and the application icons in the hotspot folder are displayed.

According to an existing application icon display method, when there are many applications in an electronic device, a user often forgets where an application icon is placed, thereby resulting in low search efficiency and a low opening speed.

By comparison, according to the application icon display method in this application, a hotspot application is determined according to usage of applications, and an application icon corresponding to the hotspot application is placed in a hotspot folder. Therefore, a user can find a required application only in the hotspot folder, thereby improving search efficiency of applications. All application icons in the hotspot folder are shortcuts of applications, and locations of the application icons in the hotspot folder do not affect a location of an original application icon on a desktop of the electronic device, thereby improving user experience.

In addition, in this application, the hotspot folder does not need to be generated by the user, and the hotspot folder is automatically generated after the hotspot folder function is enabled.

In another embodiment, the method further includes:
dragging the hotspot folder to a target location on the desktop if a drag operation on the hotspot folder is received.

The user may drag the hotspot folder to a target location, for example, from the middle of the desktop to the bottom of the desktop.

In another embodiment, the method further includes:
disabling the hotspot folder function if a close operation on the hotspot folder is received.

When the user does not need to use the hotspot folder function, the hotspot folder function of the electronic device is disabled.

The user may enter the hotspot application setting interface, set the hotspot folder function switch to an off state on the hotspot application setting interface, and disable the hotspot folder function. The user may also disable the hotspot folder function in other manners. For example, the user may perform a second preset button operation (for example, simultaneously pressing the power button and the menu button of the electronic device) on the electronic device to disable the hotspot folder function. For another example, the user may send a second preset speech instruction (for example, "Disable a hotspot folder function") to disable the hotspot folder function.

In another embodiment, the method further includes:
starting, after a start command for an application icon in the hotspot folder is received, an application corresponding to the application icon.

The user may tap any application icon in the hotspot folder on the hotspot folder page to start a corresponding application.

In another embodiment, the method further includes:

determining, if it is detected that an application icon on the desktop of the electronic device is touched and held, whether the touched and held application icon is in the hotspot folder;
displaying a shortcut "Add to a hotspot folder" if the touched and held application icon is not in the hotspot folder; and
copying the touched and held application icon to the hotspot folder if it is detected that the user selects the shortcut "Add to a hotspot folder".

By adding the shortcut "Add to a hotspot folder" to the application icon, the user can conveniently copy the application icon to the hotspot folder.

In another embodiment, the method further includes:

displaying a shortcut "Remove from a hotspot folder" if the touched and held application icon is in the hotspot folder;

and

removing the touched and held application icon from the hotspot folder if it is detected that the user selects the shortcut "Remove from a hotspot folder".

In another embodiment, the method further includes:

detecting whether the hotspot folder is touched and held; and
displaying a shortcut operation interface of the hotspot folder when it is detected that the hotspot folder is touched and held.

A shortcut menu of the shortcut operation interface may include "Delete a hotspot folder", "Copy a hotspot folder to a lock screen", and "Switch a hotspot folder policy".
The following describes how to display an application icon in a hotspot folder according to a smart policy.
In this example, a day is divided into six time periods: early morning, morning, forenoon, noon, afternoon, and evening. Time corresponding to the six time periods is as follows:

00:00-6:00 Early morning
6:00-9:00 Morning
9:00-12:00 Forenoon
12:00-14:00 Noon
14:00-18:00 Afternoon
18:00-24:00 Evening

Application running data of the last X days (for example, the last three days) is obtained, including an application name, application start time, and application end time. The application running data is analyzed according to a time period dimension to obtain an application ranking in each time period.
In an embodiment, an application opening times and application running duration are calculated, and applications are ranked by using the application opening times and the application running duration as ranking factors.

$$\text{Application running duration} = (\text{Application end time} - \text{Application start time})$$

Application opening times = Opening times in this time period within the last X days
It is assumed that the application running data of the last three days is as follows:

**Day 1**

| No. | Application name | Application start time | Application end time |
| --- | --- | --- | --- |
| 1 | WeChat | 7:00 | 9:00 |
| 2 | Weibo | 18:30 | 21:00 |
| 3 | 12306 | 12:00 | 12:30 |
| 4 | China Merchants Bank | 8:00 | 8:10 |
| 5 | Nanjing Citizen Card | 12:00 | 12:30 |
| 6 | Welink | 9:00 | 12:00 |
| 7 | App Store | 10:00 | 10:10 |
| 8 | KooWo Music | 18:30 | 21:00 |
| 9 | iQIYI | 18:30 | 21:00 |
| 10 | Camera | 12:30 | 12:40 |
| 11 | Jingdong | 19:00 | 21:00 |

(continued)

| No. | Application name | Application start time | Application end time |
| --- | --- | --- | --- |
| 12 | Taobao | 19:00 | 21:00 |
| 13 | Amap | 8:00 | 10:00 |
| 14 | Moji Weather | 6:00 | 6:30 |
| 15 | Ximalaya | 7:00 | 8:30 |

Day 2

| No. | Application name | Application start time | Application end time |
| --- | --- | --- | --- |
| 1 | WeChat | 7:00 | 9:00 |
| 2 | Weibo | 18:30 | 21:00 |
| 3 | 12306 | 12:00 | 12:30 |
| 4 | China Merchants Bank | 19:00 | 20:00 |
| 5 | Nanjing Citizen Card | 12:00 | 12:30 |
| 6 | Welink | 10:00 | 12:00 |
| 7 | App Store | 7:00 | 7:10 |
| 8 | KooWo Music | 6:30 | 8:00 |
| 9 | iQIYI | 7:30 | 8:00 |
| 10 | Camera | 12:30 | 12:40 |
| 11 | Jingdong | 8:00 | 8:30 |
| 12 | Taobao | 19:00 | 21:00 |
| 13 | Amap | 8:00 | 10:00 |
| 14 | Moji Weather | 6:00 | 6:30 |
| 15 | Ximalaya | 7:00 | 8:30 |

Day 3

| No. | Application name | Application start time | Application end time |
| --- | --- | --- | --- |
| 1 | WeChat | 7:00 | 9:00 |
| 2 | Weibo | 18:30 | 21:00 |
| 3 | 12306 | 12:00 | 12:30 |
| 4 | China Merchants Bank | 19:00 | 20:00 |
| 5 | Nanjing Citizen Card | 12:00 | 12:30 |
| 6 | Welink | 9:00 | 12:00 |
| 7 | App Store | 10:00 | 10:10 |
| 8 | KooWo Music | 20:30 | 21:00 |
| 9 | iQIYI | 18:30 | 21:00 |

(continued)

| No. | Application name | Application start time | Application end time |
|---|---|---|---|
| 10 | Camera | 6:30 | 6:40 |
| 11 | Jingdong | 19:00 | 21:00 |
| 12 | Taobao | 19:00 | 21:00 |
| 13 | Amap | 8:00 | 10:00 |
| 14 | Moji Weather | 21:00 | 21:30 |
| 15 | Ximalaya | 20:00 | 20:30 |

Applications are ranked, and statistics are collected on top 10 applications as applications that may be used by the user on the fourth day. Application icons corresponding to the top 10 applications are placed in the hotspot folder.
According to the foregoing statistics mode, the application opening times is used as a ranking factor with the highest priority. The application running time is compared in a case where the application opening timess are identical.
Average application running duration may be used as the application running duration. The average application running duration is equal to a total running time of the application in X days divided by the application opening times.
For example, a statistics result in the morning time period is as follows:

| No. | Application name | Application opening times | Average application running duration (min) |
|---|---|---|---|
| 1 | WeChat | 3 | 120 |
| 2 | Weibo | 0 | 0 |
| 3 | 12306 | 0 | 0 |
| 4 | China Merchants Bank | 0 | 0 |
| 5 | Nanjing Citizen Card | 0 | 0 |
| 6 | Welink | 0 | 0 |
| 7 | App Store | 1 | 10 |
| 8 | KooWo Music | 1 | 90 |
| 9 | iQIYI | 1 | 30 |
| 10 | Camera | 1 | 10 |
| 11 | Jingdong | 1 | 30 |
| 12 | Taobao | 0 | 0 |
| 13 | Amap | 3 | 60 |
| 14 | Moji Weather | 2 | 90 |
| 15 | Ximalaya | 2 | 90 |

The following table lists an application ranking (TOP 10) in the morning time period. If the current time is morning, application icons corresponding to the applications in the following table are placed in the hotspot folder in sequence.

| No. | Application name | Opening times | Average running duration (min) |
|---|---|---|---|
| 1 | WeChat | 3 | 120 |
| 2 | Amap | 3 | 60 |
| 3 | Ximalaya | 2 | 90 |
| 4 | Moji Weather | 2 | 30 |
| 5 | KooWo Music | 1 | 90 |

(continued)

| No. | Application name | Opening times | Average running duration (min) |
|-----|------------------|---------------|--------------------------------|
| 6 | Jingdong | 1 | 30 |
| 7 | iQIYI | 1 | 30 |
| 8 | China Merchants Bank | 1 | 10 |
| 9 | App Store | 1 | 10 |
| 10 | Camera | 1 | 10 |

The following describes how to display an application icon in a hotspot folder according to a recent policy.

Analysis is performed in a time point dimension to obtain 10 applications recently used.

It is assumed that the following application running data is obtained:

| No. | Application name | Application start time | Application end time |
|-----|------------------|------------------------|----------------------|
| 1 | WeChat | 7:00 | 9:00 |
| 2 | Weibo | 18:30 | 21:00 |
| 3 | 12306 | 12:00 | 12:30 |
| 4 | China Merchants Bank | 19:00 | 20:00 |
| 5 | Nanjing Citizen Card | 12:00 | 12:30 |
| 6 | Welink | 9:00 | 12:00 |
| 7 | App Store | 10:00 | 10:30 |
| 8 | KooWo Music | 20:30 | 21:00 |
| 9 | iQIYI | 18:30 | 21:00 |
| 10 | Camera | 6:30 | 7:00 |
| 11 | Jingdong | 19:00 | 21:00 |
| 12 | Taobao | 19:00 | 21:00 |
| 13 | Amap | 8:00 | 10:00 |
| 14 | Moji Weather | 20:00 | 21:00 |
| 15 | Ximalaya | 20:00 | 20:30 |

When it is detected that an application exits, the applications are re-ranked and content of the hotspot folder is updated.

For example, if the user opens the hotspot folder at 21:00, a time difference between 21:00 and the application end time is calculated:

| No. | Application name | Application end time | Calculate recent applications based on 21:00 |
|-----|------------------|----------------------|-----------------------------------------------|
| 1 | WeChat | 9:00 | 12 h |
| 2 | Weibo | 21:00 | 0 h |
| 3 | 12306 | 12:30 | 8.5 h |
| 4 | China Merchants Bank | 20:00 | 1h |
| 5 | Nanjing Citizen Card | 12:30 | 8.5 h |
| 6 | Welink | 12:00 | 9h |
| 7 | App Store | 10:30 | 10.5 h |
| 8 | KooWo Music | 21:00 | 0 h |

(continued)

| No. | Application name | Application end time | Calculate recent applications based on 21:00 |
|---|---|---|---|
| 9 | iQIYI | 21:00 | 0 h |
| 10 | Camera | 7:00 | 14 h |
| 11 | Jingdong | 21:00 | 0 h |
| 12 | Taobao | 21:00 | 0 h |
| 13 | Amap | 10:00 | 11h |
| 14 | Moji Weather | 21:00 | 0 |
| 15 | Ximalaya | 20:30 | 0.5 h |

Top 10 recent applications are as follows:

| No. | Application name | Application end time | Calculate recent applications based on 21:00 |
|---|---|---|---|
| 1 | Moji Weather | 21:00 | 0 h |
| 2 | Taobao | 21:00 | 0 h |
| 3 | Jingdong | 21:00 | 0 h |
| 4 | iQIYI | 21:00 | 0 h |
| 5 | KooWo Music | 21:00 | 0 h |
| 6 | Weibo | 21:00 | 0 h |
| 7 | Ximalaya | 20:30 | 0.5 h |
| 8 | China Merchants Bank | 20:00 | 1h |
| 9 | 12306 | 12:30 | 8.5 h |

| No. | Application name | Application end time | Calculate recent applications based on 21:00 |
|---|---|---|---|
| 10 | Nanjing Citizen Card | 12:30 | 8.5 h |

Application icons of top 10 recent applications are placed into the hotspot folder in sequence.

The foregoing descriptions are merely specific implementations of this application, but are not intended to limit the protection scope of this application. A person of ordinary skill in the art may make improvements without departing from the creative concept of this application, but all these improvements shall fall within the protection scope of this application.

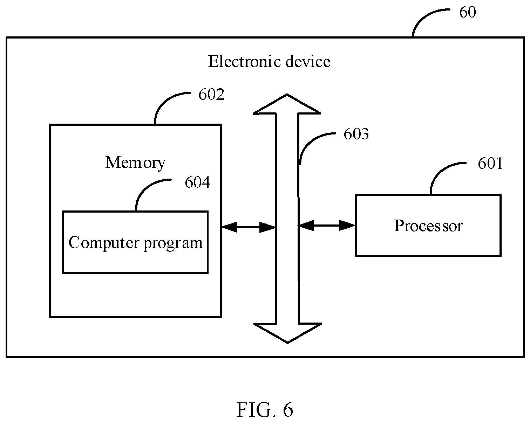

Reference is made to FIG. 6. FIG. 6 is a schematic structural diagram of an electronic device according to this application. As shown in FIG. 6, an electronic device 60 includes one or more processors 601 and a memory 602. The processor 601 and the memory 602 are connected through one or more communication buses 603. The memory 602 is configured to store one or more computer programs 604. The one or more computer programs 604 are configured to be executed by the processor 601. The one or more computer programs 604 include instructions. The instructions may be used to perform the steps performed by the electronic device (such as a mobile phone) in the foregoing embodiments, so as to implement an application icon display function in the electronic device.

Embodiments further provide a computer storage medium. The computer storage medium stores computer instructions. When the computer instructions run on an electronic device, the electronic device is enabled to perform the related method steps, so as to implement the application icon display method in the foregoing embodiments.

Embodiments further provide a computer program product. When the computer program product runs on an electronic device, the electronic device is enabled to perform the related steps, so as to implement the application icon display method in the foregoing embodiments.

In addition, embodiments of this application further provide an apparatus. The apparatus may be specifically a chip, an assembly, or a module. The apparatus may include a processor and a memory that are connected. The memory is configured to store computer execution instructions. When the apparatus runs, the processor may execute the computer execution instructions stored in the memory, to enable the chip to perform the application icon display method in the foregoing method embodiments.

The electronic device, the computer storage medium, the computer program product, or the chip provided in embodiments is configured to perform the corresponding method provided above. Therefore, for beneficial effects that can be achieved, reference may be made to the beneficial effects of the corresponding method provided above. Details are not described herein again.

The foregoing descriptions about implementations allow a person skilled in the art to understand that, for the purpose of convenient and brief description, division of the foregoing functional modules is taken as an example for illustration. In actual application, the foregoing functions may be allocated to different modules and implemented according to a requirement, that is, an inner structure of an apparatus is divided into different functional modules to implement all or some of the functions described above.

In several embodiments provided in this application, it should be understood that the disclosed apparatus and method may be implemented in other manners. For example, the apparatus embodiments described above are merely examples. For example, division into the modules or units is merely logical function division, and may be other division in an actual implementation. For example, a plurality of units or assemblies may be combined or may be integrated into another apparatus, or some features may be ignored or not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of this application essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that may store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. An application icon display method, applied to an electronic device, wherein the method comprises:

    enabling a hotspot folder function if a hotspot folder function enabling operation is received;
    setting a hotspot folder policy;
    creating a hotspot folder on a desktop of the electronic device;
    obtaining application running data of the electronic device; and
    determining a hotspot application according to the hotspot folder policy and the application running data, keeping a location of an original application icon on the desktop of the electronic device unchanged, and placing an application icon corresponding to the hotspot application in the hotspot folder.

2. The application icon display method according to claim 1, wherein the hotspot folder function enabling operation is received through a hotspot application setting interface, the hotspot application setting menu comprises a hotspot folder function switch, and the hotspot folder function enabling operation is received if the hotspot folder function switch is in an on state.

3. The application icon display method according to claim 1, wherein the determining a hotspot application according to the hotspot folder policy and the application running data is performed if the hotspot folder policy changes, or if the hotspot folder policy is a recent policy and it is detected that an application exits, or if the hotspot folder policy is a smart policy and a time period corresponding to time of the electronic device changes.

4. The application icon display method according to claim 1, wherein the method further comprises:
opening the hotspot folder if a hotspot folder opening operation is received.

5. The application icon display method according to claim 1, wherein the method further comprises:
dragging the hotspot folder to a target location on the desktop of the electronic device if a drag operation on the hotspot folder is received.

6. The application icon display method according to claim 1, wherein the method further comprises:
disabling the hotspot folder function if a close operation on the hotspot folder is received.

7. The application icon display method according to claim 1, wherein the method further comprises:

   displaying a shortcut "Add to a hotspot folder" if it is detected that an application icon on the desktop of the electronic device is touched and held, and the touched and held application icon is not in the hotspot folder; and
   copying the touched and held application icon to the hotspot folder if it is detected that a user selects the shortcut "Add to a hotspot folder".

8. The application icon display method according to claim 7, wherein the method further comprises:

   displaying a shortcut "Remove from a hotspot folder" if the touched and held application icon is in the hotspot folder; and
   removing the touched and held application icon from the hotspot folder if it is detected that the user selects the shortcut "Remove from a hotspot folder".

9. The application icon display method according to any one of claims 1 to 7, wherein the method further comprises:
displaying a shortcut operation interface of the hotspot folder if it is detected that the hotspot folder is touched and held.

10. The application icon display method according to claim 9, wherein the shortcut operation interface comprises a shortcut menu "Delete a hotspot folder", a shortcut menu "Copy a hotspot folder to a lock screen", and a shortcut menu "Switch a hotspot folder policy".

11. A computer-readable storage medium, comprising computer instructions, wherein when the computer instructions are run on an electronic device, the electronic device is enabled to perform the application icon display method according to any one of claims 1 to 10.

12. An electronic device, comprising a processor and a memory, wherein the memory is configured to store instructions, the processor is configured to invoke the instructions in the memory, and the electronic device is enabled to perform the application icon display method according to any one of claims 1 to 10.

13. A chip system, applied to an electronic device, wherein the chip system comprises an interface circuit and a processor; the interface circuit and the processor are interconnected through a line; the interface circuit is configured to receive a signal from a memory of the electronic device, and send a signal to the processor, and the signal comprises computer instructions stored in the memory; and when the processor executes the computer instructions, the chip system performs the application icon display method according to any one of claims 1 to 10.

FIG. 1

FIG. 2

~
TO
FIG. 3B

FIG. 3A

CONT.
FROM
FIG. 3A
~

Settings

⊞ Application 〉

~
TO
FIG. 3C

FIG. 3B

CONT.
FROM
FIG. 3B
~

FIG. 3C

Hotspot folder opening agreement

XXXXXXXXXXXXXXXXXXXXXXXXXXXXXXX
XXXXXXXXXXXXXXXXXXXXXXXXXXXXXX
XXXXXXXXXXXXXXXXXXXXXXXXXXXXXX
XXXXXXXXXXXXXXXXXXXXXXXXXXXXXX
XXXXXXXXXXXXXXXXXXXXXXXXXXXXXX
.

☐ Agree to terms of hotspot folder agreement

Hotspot folder opening:

Policy:  ● Smart  ○ Maximum  ○ Recent

FIG. 4

Hotspot folder

Settings    Mailbox    Calculator

Phone    Camera    Messages

~
TO
FIG. 5B

FIG. 5A

CONT.
FROM
FIG. 5A

Hotspot folder

Camera    Mailbox    Messages

FIG. 5B

60

Electronic device

602

Memory

604

Computer program

603

601

Processor

FIG. 6

# EP 4 220 363 A1

## INTERNATIONAL SEARCH REPORT

| | International application No. |
|---|---|
| | **PCT/CN2021/111876** |

### A. CLASSIFICATION OF SUBJECT MATTER

G06F 3/048(2013.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, CNKI, WPI, EPODOC: 应用, 图标, 热点, 文件夹, 开启, 设置, 配置, 开关, 打开, 使用, 频率, 快捷, application, icon, hot spot, folder, start, set, configuration, switch, open, usage, frequency

### C. DOCUMENTS CONSIDERED TO BE RELEVANT

| Category* | Citation of document, with indication, where appropriate, of the relevant passages | Relevant to claim No. |
|---|---|---|
| A | CN 104391621 A (BEIJING YUANXIN TECHNOLOGY CO., LTD.) 04 March 2015 (2015-03-04)<br>description paragraphs 4-9, 25-32 | 1-13 |
| A | CN 101853168 A (YULONG COMPUTER TELECOMMUNICATION SCIENTIFIC (SHENZHEN) CO., LTD.) 06 October 2010 (2010-10-06)<br>description paragraphs 6-7, 17-24 | 1-13 |
| A | CN 104216632 A (XIAOMI TECHNOLOGY CO., LTD.) 17 December 2014 (2014-12-17)<br>entire document | 1-13 |
| A | CN 109542551 A (SHANGHAI WENTAI INFORMATION TECHNOLOGY CO., LTD.) 29 March 2019 (2019-03-29)<br>entire document | 1-13 |
| A | CN 106033301 A (SUNING CORPORATION) 19 October 2016 (2016-10-19)<br>entire document | 1-13 |
| A | US 2013254692 A1 (SAMSUNG ELECTRONICS CO., LTD.) 26 September 2013 (2013-09-26)<br>entire document | 1-13 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **27 October 2021** | **09 November 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/111876**

| Patent document cited in search report | | | Publication date (day/month/year) | Patent family member(s) | | | Publication date (day/month/year) |
|---|---|---|---|---|---|---|---|
| CN | 104391621 | A | 04 March 2015 | None | | | |
| CN | 101853168 | A | 06 October 2010 | None | | | |
| CN | 104216632 | A | 17 December 2014 | None | | | |
| CN | 109542551 | A | 29 March 2019 | None | | | |
| CN | 106033301 | A | 19 October 2016 | None | | | |
| US | 2013254692 | A1 | 26 September 2013 | KR | 20130108745 | A | 07 October 2013 |

Form PCT/ISA/210 (patent family annex) (January 2015)

**EP 4 220 363 A1**

**REFERENCES CITED IN THE DESCRIPTION**

**Patent documents cited in the description**

- CN 202011035448